# EUROPÄISCHE PATENTSCHRIFT

(11) **EP 2 266 750 B1**
(45) Veröffentlichungstag und Bekanntmachung des Hinweises auf die Patenterteilung: **25.02.2015**
(21) Anmeldenummer: 10006322.1
(22) Anmeldetag: 18.06.2010
(51) Int. Cl.: B23Q 11/10, F16L 23/16

(54) **Werkzeugsystem**
Tool system
Système d'outillage

(30) Priorität: 24.06.2009 DE 102009030327; 22.02.2010 DE 102010008873
(43) Veröffentlichungstag der Anmeldung: 29.12.2010
(60) Teilanmeldung: 11184199.5
(73) Patentinhaber: Gühring OHG, 72458 Albstadt (DE)
(72) Erfinder: Bozkurt, Lutfi, 72474 Winterlingen (DE)
(74) Vertreter: Meitinger, Thomas Heinz

(56) Entgegenhaltungen:
- DE-A1- 10 316 394
- DE-A1-102005 013 483
- DE-A1-102006 016 883
- DE-U1-202006 013 413
- US-A- 2 276 945
- US-A- 5 915 896

## Beschreibung

### GEBIET DER ERFINDUNG

Die vorliegende Erfindung betrifft Werkzeugsystem mit einem Kühl- und/oder Schmiermittelkanal und eine Vorrichtung zur Abdichtung des Kühl- und/oder Schmiermittelkanals.

### HINTERGRUND DER ERFINDUNG

Werkzeugsysteme können mehrere Werkzeugteile umfassen durch die Kühl- und/oder Schmiermittelkanäle geführt werden müssen, um die arbeitenden Teile des Werkzeugsystems mit Kühl- und/oder Schmiermitteln zu versorgen. Im Stand der Technik sind die DE102006016883A1, die DE102005013483A1, die DE10316394A1, die DE202006013413U1, die US5915896 und die US2276945 bekannt. Die DE102006016883A1 beschreibt ein Verfahren zum Befestigen eines Werkzeugs in einem Werkzeugfutter und ein Werkzeugfutter. Die DE102005013483A1 zeigt ein Möglichkeit der Verbesserung der Schmiermitteldurchleitung. Das Dokument DE10316394A1 beschreibt ein Dehnspannfutter für Bohrwerkzeuge. Die DE202006013413U1 zeigt eine Drehdurchführung. Das Dokument US5915896 beschreibt ein Hochgeschwindigkeitswerkzeug und die US2276945 zeigt eine Haltevorrichtung.

### ZUSAMMENFASSUNG DER ERFINDUNG

Die Schnittstellen der einzelnen Werkzeugteile bereiten dabei Probleme bezüglich der Abdichtung des Kühl- und/oder Schmiermittelkanals.

Es kann daher als eine Aufgabe der vorliegenden Erfindung betrachtet werden, ein Werkzeugsystem mit einem Kühl- und/oder Schmiermittelkanal und eine Vorrichtung zur Abdichtung eines Kühl- und/oder Schmiermittelkanals insbesondere an einer Schnittstelle von zwei Werkzeugteilen des Werkzeugsystems zur Verfügung zu stellen.

Diese Aufgabe wird durch die Merkmalskombinationen des unabhängigen Anspruchs gelöst. Weitere vorteilhafte Ausgestaltungen der Erfindung ergeben sich aus den abhängigen Ansprüchen.

Gemäß einem ersten Aspekt der Erfindung wird ein Werkzeugsystem vorgeschlagen, das ein erstes Werkzeugteil und einen ersten Kühl- und/oder Schmiermittelkanalabschnitt eines Kühl- und/oder Schmiermittelkanals durch das Werkzeugsystem umfasst, wobei der erste Kühl- und/oder Schmiermittelkanalabschnitt durch das erste Werkzeugteil verläuft.

Gemäß der Erfindung umfasst das Werkzeugsystem ein zweites Werkzeugteil und eine Vorrichtung zur Abdichtung des Kühl- und/oder Schmiermittelkanals an einer Schnittstelle zwischen dem ersten Werkzeugteil und dem zweiten Werkzeugteil, wobei das erste Werkzeugteil mit dem zweiten Werkzeugteil, insbesondere verkippbar, verbindbar ist, wobei der Kühl- und/oder Schmiermittelkanal einen zweiten Kühl- und/oder Schmiermittelkanalabschnitt, der durch das zweite Werkzeugteil und einen dritten Kühl- und/oder Schmiermittelkanalabschnitt, der durch die Vorrichtung verläuft.

Ferner gemäß der Erfindung ist die Vorrichtung vorgesehen zur Abdichtung zum Abdichten des Kühl- und/oder Schmiermittelkanals an einer Schnittstelle zwischen dem ersten Werkzeugteil und dem zweiten Werkzeugteil und umfasst folgendes: einen ersten Abschnitt, der mit dem ersten Werkzeugteil verbindbar ist, einen zweiten Abschnitt, der derart angeordnet ist, dass er in den zweiten Kühl- und/oder Schmiermittelkanalabschnitt des zweiten Werkzeugteils hineinragen kann, wobei ein Außendurchmesser des zweiten Abschnitts größer als oder gleich wie ein Innendurchmesser des zweiten Kühl- und/oder Schmiermittelkanalabschnitts des zweiten Werkzeugteils ist, und einen mittleren Abschnitt, der zwischen dem ersten Abschnitt und dem zweiten Abschnitt angeordnet ist.

Das erste und/oder zweite Werkzeugteil kann dabei einen Hohlschaftkegel bzw. einen Steilkegel bzw. eine Halterung für ein Werkzeug oder ein Spannfutter umfassen. Der Kühl- und/oder Schmiermittelkanal kann dabei zentral und/oder dezentral durch die Werkzeugteile führend angeordnet sein.

Insbesondere dient der zweite Abschnitt der Vorrichtung der Abdichtung. Der Außendurchmesser des zweiten Abschnitts weist hierzu im Vergleich zum Innendurchmesser des Kühl- und/oder Schmiermittelkanals ein Übermaß auf. Hierdurch wird sichergestellt, dass kein Spalt zwischen der Vorrichtung und der Innenwandung des Kühl- und/oder Schmiermittelkanals entstehen kann, wodurch sich Lecks ergeben könnten.

Die Vorrichtung zur Abdichtung ist vorteilhaft, da zum Sicherstellen der Dichtheit der Schnittstelle zwischen dem ersten und dem zweiten Werkzeugteil keine weiteren Vorrichtungen bzw. Maßnahmen nötig sind. Beispielsweise kann darauf verzichtet werden, Anlageflächen der Schnittstelle zu schleifen, um eine geringe Rauheit bzw. Welligkeit zu erreichen.

In einer Ausführungsform kann das erfindungsgemäße Werkzeugsystem einen Flansch umfassen. Dieser Flansch kann eine erste Platte, und eine zweite Platte umfassen, wobei die erste Platte mit der zweiten Platte verbindbar ist, wobei die zweite Platte Bohrungen mit Innengewinde aufweist, in die Schrauben einschraubbar sind, wodurch die Spitzen der Schrauben auf der ersten Platte aufsitzen, wobei die zweite Platte mindestens sechs Bohrungen mit Innengewinde aufweist.

Eine lösbare Verbindung zwischen den zwei Werkzeugteilen wird z.B. durch den Flansch erzielt, wobei die beiden Platten des Flansches miteinander verschraubt oder verklemmt werden können. Falls ein Werkzeugteil z.B. ein Spannfutter für ein Werkzeug umfasst, muss sichergestellt werden, dass dieses Werkzeugteil bei Rotation rund läuft. Hierzu kann es notwendig sein, das Spannfutter in Relation zum verbundenen Werkzeugteil zu kippen. Dies kann durch Schrauben, die in eine erste der beiden Flanschplatte des Spannfutters eingeschraubt werden erreicht werden, wodurch diese gegen eine zweite der beiden Flanschplatte gepresst werden, woraus ein Neigen des Spannfutters zum anderen Werkzeugteil resultieren kann. Vorteilhafterweise werden hierzu mindestens sechs Schrauben, gleichmäßig oder ungleichmäßig über den Umfang der Flanschplatte verteilt, verwendet, um eine sehr genaue Einstellung zu ermöglichen. Hierdurch wird ein exakter Rundlauf des Spannfutters sichergestellt.

Erfindungsgemäß ist die Vorrichtung vorgesehen zum Abdichten des Kühl- und/oder Schmiermittelkanals an einer Schnittstelle zwischen einem ersten Werkzeugteil und einem zweiten Werkzeugteil. Ferner weist der zweite Abschnitt einen größeren Außendurchmesser als der mittlere Bereich auf und ist so ausgebildet, dass er mit dem zweiten Kühl- und/oder Schmiermittelkanalabschnitt verklemmt werden kann.

Gemäß einem weiteren Ausführungsbeispiel der vorliegenden Erfindung wird ein Werkzeugsystem zur Verfügung gestellt, wobei das erste Werkzeugteil eine erste Platte eines Flansches umfasst, und das zweite Werkzeugteil eine zweite Platte des Flansches umfasst, wobei das erste Werkzeugteil mit dem zweiten Werkzeugteil mittels des Flansches verbindbar ist, wobei die eine der ersten bzw. zweiten Platte Bohrungen mit Innengewinde aufweist, in die Schrauben einschraubbar sind, wobei Spitzen der Schrauben auf der komplementären zweiten bzw. ersten Platte aufsitzen.

Durch eine vorteilhafte Ausgestaltung mit einer weit in den Kühl- und/oder Schmiermittelkanal hineinragenden Vorrichtung zur Abdichtung ist ein dichter Kühl- und/oder Schmiermittelkanal auch z.B. bei Montagearbeiten an den Werkzeugteilen gewährleistet, insbesondere wenn die Werkzeugteile zwar nicht auseinander gebaut werden müssen, aber deren Verbindung dennoch gelockert werden muss.

Gemäß einer beispielhaften Ausführungsform der Erfindung wird ein Werkzeugsystem zur Verfügung gestellt, wobei die eine der ersten bzw. zweiten Platte mindestens sechs Bohrungen mit Innengewinde aufweist..

Vorteilhafterweise besteht die Vorrichtung aus mehreren, z.B. zwei Teilen, wodurch eine Produktion komplizierter Bauteile vermieden werden kann. Hierdurch können stattdessen einfachere Teile hergestellt werden bzw. es kann auf Normteile zurückgegriffen werden bei der Herstellung der Vorrichtung zur Abdichtung. Die Scheibe kann ferner bereits früh während der Produktion in das Werkzeugteil eingesetzt werden, ohne befürchten zu müssen, dass während des weiteren Produktionsablaufs Schäden durch hervorragende Teile entstehen könnten.

Durch einen Aufbau mit einem oder zwei verdickten Enden der Vorrichtung zur Abdichtung und einem im Vergleich hierzu schlanken mittleren Abschnitt ergibt sich eine leichtere Montage der Vorrichtung mit den Werkzeugteilen, da sich größere Freiheitsgrade beim Verschwenken der Vorrichtung in Relation zu den Werkzeugteilen ergeben.

Die erfindungsgemäße Vorrichtung zur Abdichtung kann mit einem oder mehreren Außengewinden versehen werden, um eine lösbare Verbindung mit einem oder mehreren Werkzeugteilen herzustellen, wodurch sicher gestellt wird, dass die Vorrichtung zur Abdichtung z.B. beim Zusammensetzen der Werkzeugteile nicht verrutschen kann und dadurch ihre Dichtfunktion einbüßen könnte. Ferner kann in einer weiteren Ausführungsform die Vorrichtung zur Abdichtung mit O-Ringen versehen werden, wodurch eine noch bessere Dichtfunktion erreicht werden kann.

Als ein Aspekt der Erfindung kann angesehen werden, eine Dichtung (Vorrichtung zur Abdichtung) zur Verfügung zu stellen, die die Kühl- und/oder Schmiermittelkanäle zweier Werkzeugteile miteinander verbindet, wobei durch die röhrenförmige Ausgestaltung der Dichtung auch bei einem begrenzten Auseinanderfahren der betreffenden Werkzeugteile die Dichtheit des Kühl- und/oder Schmiermittelkanals sichergestellt wird.

Ferner ist ein weiterer Aspekt der Erfindung das Anordnen von mindestens sechs Schrauben an einer Anlageplatte eines Flansches, wodurch die Spitzen der Schrauben gegen die komplementäre Flanschplatte gepresst werden, um ein Verkippen des einen Werkzeugteils zum anderen Werkzeugteils zu ermöglichen. Durch die Verwendung von mindestens sechs Schrauben kann ein sehr guter Rundlauf eingestellt werden, was die Qualität von z.B. Bohrungen drastisch erhöhen kann.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1. einen Längsschnitt eines Werkzeugsystems mit zwei Werkzeugteilen in einer ersten Ausführungsform;
Fig. 2. ein Längsschnitt des einen Werkzeugteils aus Fig. 1;
Fig. 3. als Teil eines Flansches eine Platte des Werkzeugteils aus Fig. 2;
Fig. 4. einen Längsschnitt des anderen Werkzeugteils aus der Fig. 1;
Fig. 5. als Teil des Flansches eine Platte des Werkzeugteils aus Fig. 4;
Fig. 6. eine Vorrichtung zur Abdichtung, in einer ersten Ausführungsform, des Werkzeugsystems aus der Fig. 1;
Fig. 7 eine alternative Vorrichtung zur Abdichtung, in einer zweiten Ausführungsform, des Werkzeugsystems aus der Fig. 1;
Fig. 8 einen Längsschnitt eines Werkzeugsystems mit zwei Werkzeugteilen in einer zweiten Ausführungsform; und
Fig. 9 einen Längsschnitt eines Werkzeugsystems mit zwei Werkzeugteilen in einer dritten Ausführungsform der erfindungsgemäßen Vorrichtung zur Abdichtung.

### DETAILLIERTE BESCHREIBUNG BEISPIELHAFTER AUSFÜHRUNGSFORMEN

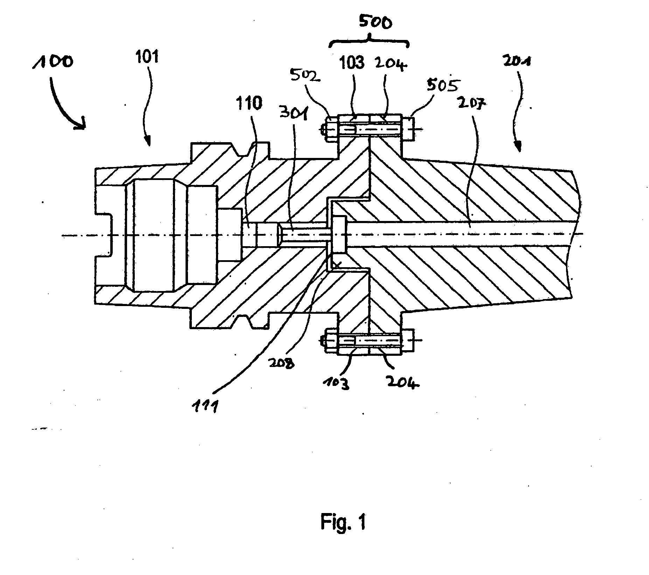

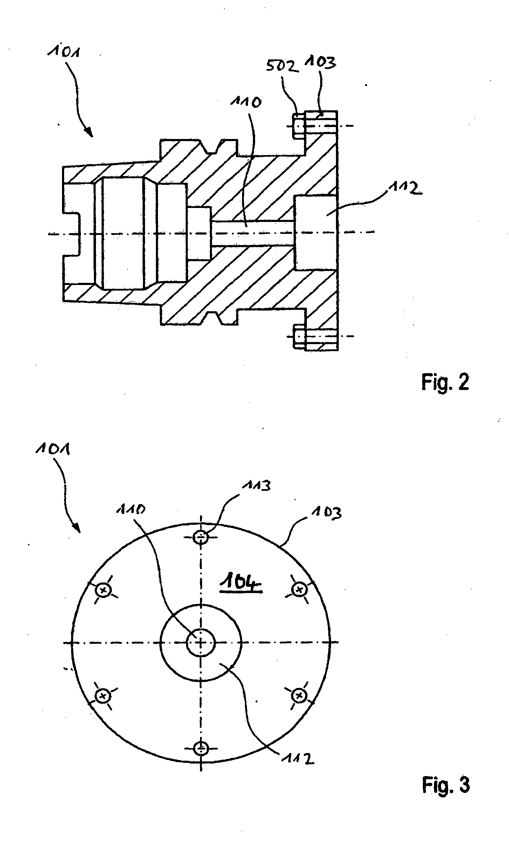

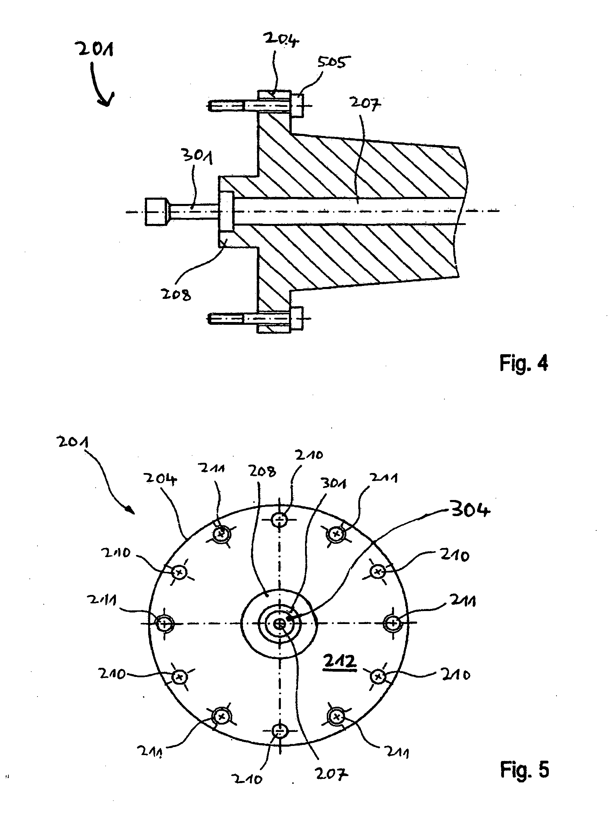

Fig. 1 zeigt eine erste Ausführungsform eines Werkzeugsystems 100 mit zwei Werkzeugteilen 101, 201, die mittels eines Flansches 500 zusammengefügt sind. Das zweite Werkzeugteil 101(siehe Fig. 2) weist einen Hohlschaftkegel und eine zweite Platte 103 des Flansches 500 auf. Das erste Werkzeugteil 201 (siehe Fig. 4) weist eine Halterung (nicht bezeichnet) für ein Werkzeug (nicht dargestellt) und eine komplementäre erste Platte 104 des Flansches 500 auf, die mit der zweiten Platte 103 des Flansches 500 verschraubt werden kann. Hierzu weisen die Platten 103, 204 des Flansches 500 fluchtende Bohrungen auf, durch die Schrauben 505 geführt werden können und mit Muttern 502 verschraubt werden können. Das Zusammenfügen der Platten 103, 204 des Flansches 500 kann auch mittels Gewindebolzen herbeigeführt werden, wobei diese auf beiden Seiten des Flansches 500 mit Muttern 502 verschraubt werden können. Eine der Platten 103, 204 des Flansches 500 kann auch Bohrungen mit Gewinde aufweisen in die Schrauben 105 eingreifen können, wodurch ebenfalls die beiden Werkzeugteile 101, 201 lösbar zusammengefügt werden können. Die Schrauben 505 können auch versenkt in der Platte 204 des Flansches 500 angeordnet sein. Das erste Werkzeugteil 201 bzw. das zweite Werkzeugteil 101, weist einen ersten Kühl- und/oder Schmiermittelkanalabschnitt 110 bzw. einen zweiten Schmiermittelkanalabschnitt 207 auf, die eine Förderung eines Kühl- und/oder Schmiermittels vom Hohlschaftkegel bis zu den arbeitenden Teilen des Werkzeugs (nicht dargestellt) ermöglichen.

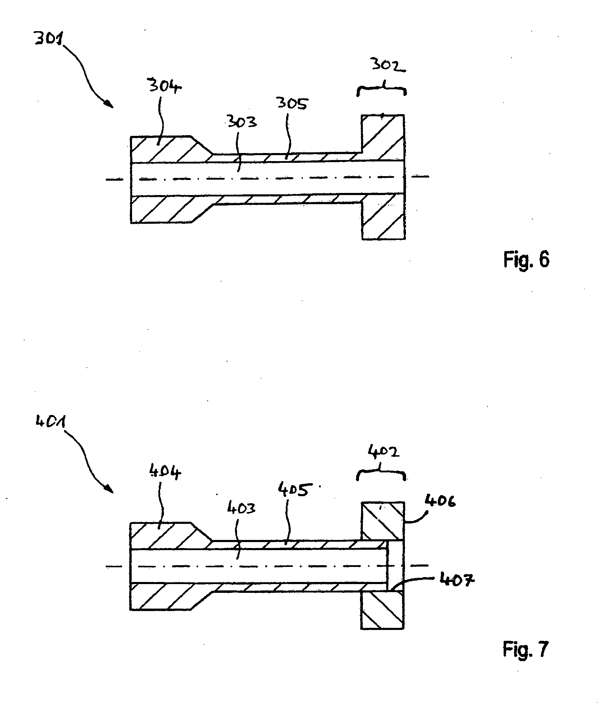

Damit das Kühl- und/oder Schmiermittel nicht an der Schnittstelle der beiden Werkzeugteile 101, 201, nämlich dem Flansch 500, austritt, ist eine Vorrichtung 301 zur Abdichtung vorgesehen. Diese Vorrichtung 301 zur Abdichtung ist in einem Vorsprung 208 des ersten Werkzeugteils 201 verankert und ragt in den zweiten Kühl- und/oder Schmiermittelkanalabschnitt 110 des zweiten Werkzeugteils 101 hinein. Die Vorrichtung 301 zur Abdichtung umfasst (siehe Fig. 6) einen zweiten Abschnitt 304 mit größerem Durchmesser, wobei dieser Durchmesser im Vergleich zum Innendurchmesser des zweiten Kühl- und/oder Schmiermittelkanalabschnitts 110 ein Übermaß aufweist. Hierdurch legt sich dieser Abschnitt 304 der Vorrichtung 301 zur Abdichtung dicht an die Innenwandungen des Kühl- und Schmiermittelkanalabschnitts 110, wodurch der Kühl- und/oder Schmiermittelkanalabschnitt 110 abgedichtet wird. Die Vorrichtung 301 zur Abdichtung dient insbesondere dazu, zu verhindern, dass Kühl- und/oder Schmiermittel in den Spalt 111 zwischen den Werkzeugteilen 101, 201 gelangen kann.

Fig. 2 zeigt das zweite Werkzeugteil 101 mit dem Hohlschaftkegel, wobei das zweite Werkzeugteil 101 auch eine zweite Platte 103 des Flansches aufweist. Ferner weist das Werkzeugteil 101 eine Ausnehmung 112 auf, in die ein komplementärer Vorsprung eines komplementären Werkzeugteils, etwa des ersten Werkzeugteils 201 eingesetzt werden kann. Durch die Kombination der Ausnehmung 112 und des Vorsprungs 208 kann eine Abdichtung der Schnittstelle des Flansches erreicht werden, insbesondere wenn die Anlageflächen 104 (siehe Fig. 3) und 212 (siehe Fig. 5) des Flansches sich durch geringe Rauheit und Welligkeit auszeichnen. Hierdurch kann durch das Werkzeugteil 201 Kühl- und/oder Schmiermittel in einem Kanal 205 geführt werden.

Fig. 3 zeigt eine Vorderansicht der zweiten Platte 103 des Flansches des zweiten Werkzeugteils 101. Hierbei ist die Platte 103 des Flansches abgebildet, die zum Werkzeugteil 101 aus der Fig. 2 gehört. Die Platte 103 umfasst Bohrungen 113 zum Zusammenfügen, wobei die Bohrungen 113 Innengewinde aufweisen können. Ferner ist die Ausnehmung 112 dargestellt sowie der Kühl- und/oder Schmiermittelkanalabschnitt 110.

Fig. 4 zeigt das erste Werkzeugteil 201, wobei das Werkzeugteil 201 einen Vorsprung 208 aufweist. Ferner ist die Vorrichtung 301 zur Abdichtung gezeigt, die abschnittsweise als Röhre ausgebildet ist. Das in Fig. 4 dargestellte Werkzeugteil 201 kann mit dem in Fig. 2 dargestellten zweiten Werkzeugteil 101 mittels der Platte 204 des Flansches zusammengefügt werden, wobei der Vorsprung 208 in das zweite Werkzeugteil 101, insbesondere in dessen Ausnehmung 112 (siehe Figuren 1 und 2) hineinragt. Dabei dient die Vorrichtung 301 zur Abdichtung zur Abdichtung der Schnittstelle an dem Flansch.

Fig. 5 zeigt eine Vorderansicht der ersten Platte 204 eines Flanschs des ersten Werkzeugteils 201 aus der Fig. 4. Dargestellt sind hierbei sechs erste Bohrungen 210 zum Zusammenfügen dieses ersten Werkzeugteils 201 mit einem weiteren Werkzeugteil, etwa dem zweiten Werkzeugteil 101 aus der Fig. 2, sowie weitere sechs zweite Bohrungen 211 zum Verkippen des ersten Werkzeugteils 201 in Relation zu dem weiteren Werkzeugteil 101. Die ersten Bohrungen 210 weisen komplementäre Bohrungen 113 bei dem weiteren Werkzeugteil 103 auf (siehe Fig. 3), wodurch ein Zusammenfügen der ersten Platte 204 des Flansches mit der zweiten Platte 103 des Flansches erreicht werden kann. Die zweiten Bohrungen 211 der Platte 204 haben keine entsprechenden Bohrungen bei der Platte 103 des weiteren Werkzeugteils. Ferner weisen die Bohrungen 211 Innengewinde auf. Hierdurch können Schrauben in die Bohrungen 211 eingeschraubt werden, deren Schraubenspitze auf der Platte, insbesondere deren der Anlagefläche, des weiteren Werkzeugteils aufsitzen, wodurch ein Verkippen beider Werkzeugteile zueinander erreicht werden kann. Ferner sind dargestellt: der Vorsprung 208 des einen Werkzeugteils 201, der erste Abschnitt 302 der Vorrichtung 301 zur Abdichtung, der im Vorsprung 208 verankert ist, sowie der zweite Abschnitt 304 der Vorrichtung 301 zur Abdichtung, der in das weitere Werkzeugteil 201 hineinragt, sowie der Kühl- und/oder Schmiermittelkanalabschnitt 207.

Fig. 6 zeigt als eine erste Ausführungsform eine Vorrichtung 301 zur Abdichtung, die folgendes umfasst: einen mittleren Abschnitt 305, einen hinteren, zweiten Abschnitt 304 mit größerem Außendurchmesser, der mit den Innenwandungen des Kühl- und/oder Schmiermittelkanalabschnitts des zweiten Werkzeugteils 201 verklemmt werden kann, einen vorderen, ersten Abschnitt 302mit ebenfalls größerem Außendurchmesser, der mit einem ersten Werkzeugteil 201 verbunden werden kann (siehe Fig. 1), sowie einen dritten Kühl- und/oder Schmiermittelkanalabschnitt 303.

Fig. 7 zeigt als eine Variante eine zweite Ausführungsform einer Vorrichtung 401 zur Abdichtung, wobei hierbei die Vorrichtung 401 in einer Scheibe 406 steckt. Die Scheibe 406 kann in ein erstes, etwa das in Fig. 4 gezeigte Werkzeugteil einsteckbar ausgebildet sein. Der dritte Kühl- und/oder Schmiermittelkanalabschnitt 403 der Vorrichtung 401 kann an einem oder auch an beiden Enden der Vorrichtung 401 aufgeweitet ausgebildet sein.

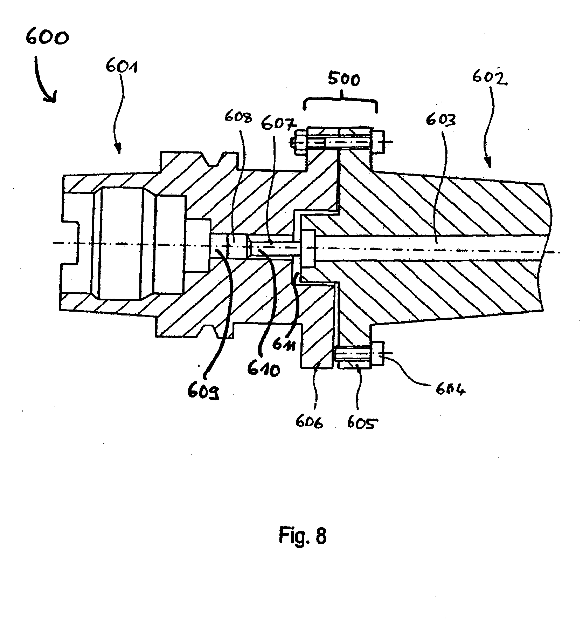

Fig. 8 zeigt eine zweite Ausführungsform eines Werkzeugsystems 600 mit zwei Werkzeugteilen 601, 602, die durch einen Flansch, etwa den Flansch 500, miteinander verbunden sind. Dabei ist das erste Werkzeugteil 602 im Vergleich zu dem zweiten Werkzeugteil 601 gekippt, um einen Rundlauf eines im Werkzeugteil 602 eingespannten Werkzeugs (nicht dargestellt) zu gewährleisten. Hierbei kann sich ein Spalt 611 zwischen den Platten (erste Platte 605 und zweite Platte 606) des Flansches 500 ergeben. Damit dennoch der durch das Werkzeugsystem 600 durchlaufende Kühl- und/oder Schmiermittelkanal 603 dicht bleibt, ist eine Vorrichtung 607 zur Abdichtung vorgesehen, die von dem einem (z.B. ersten) Werkzeugteil 602 in das andere (z.B. zweite) Werkzeugteil 601 reicht und einen Abschnitt 608 mit größerem Durchmesser aufweist, der elastisch ausgebildet ist und auch bei Verkippen eine Abdichtung garantiert.

Das Verkippen wird durch Schrauben 604 erreicht, die in ein Innengewinde der Platte 605 des Flansches eingreifen können und deren Spitze auf einer Auflagefläche der anderen Platte 606 des Flansches aufsitzen. Vorzugsweise werden mindestens sechs Schrauben verwendet, um einen guten Rundlauf des Werkzeugteils 602 zu erreichen.

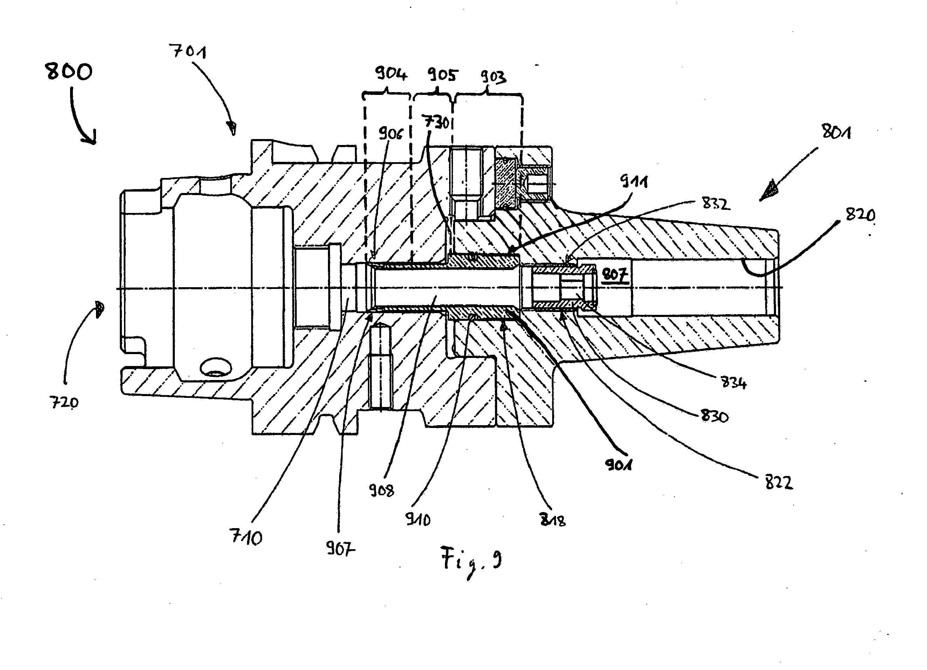

Fig. 9 zeigt eine weitere erfinderische Ausführungsform eines Werkzeugsystems 800 mit zwei Werkzeugteilen 701, 802, einer Vorrichtung 901 zur Abdichtung , wobei die Vorrichtung 901 zur Abdichtung dazu dient, dass eine leckage-freie Verbindung der Kanäle (erster 807 und zweiter 710 Kühl- und/oder Schmiermittelkanalabschnitt)für Kühl- und/oder Schmiermittel durch das erste und zweite Werkzeugteil 801, 701 sicher gestellt wird. Die Vorrichtung 901 zur Abdichtung verhindert insbesondere, dass Kühl- und/oder Schmiermittel, das von dem zentralen Kanal 710 (zweiter Kühl- und/oder Schmiermittelkanalabschnitt im zweiten Werkzeugteil 701) zu einem in eine Bohrung 820 im ersten Werkzeugteil 801 einsetzbaren Werkzeug (nicht dargestellt) geführt werden soll, in den Spalt 730 gelangen kann. Erfindungsgemäß wird daher im Ergebnis eine zielgerichtete Verwendung des Kühl- und/oder Schmiermittels zur Kühlung und/oder Schmierung der schneidenden Abschnitte des in die Bohrung 820 eingesetzten Werkzeugs, z.B. Bohrwerkzeug, Fräswerkzeug, Drehwerkzeug oder Reibahle, ermöglicht. Die Vorrichtung zur Abdichtung 901 umfasst folgendes: einen in Fig. 9 links gezeigten, zweiten Bereich 904 mit abdichtenden Bereichen auf, die z.B. als erste und zweite Dichtlippen 906, 907 ausgeführt sein können, ferner einen zentralen Kanal 908 (dritter Kühl- und/oder Schmiermittelkanalabschnitt in der Vorrichtung 901) zur Leitung von Kühl- und/oder Schmiermittel, sowie eine Dichtung, z.B. einen in Fig. 9 rechts gezeigten, ersten Bereich 903 mit einem O-Ring 910 zur Abdichtung der Vorrichtung 901 zur Abdichtung zu zumindest einem (in Fig. 9 dem ersten) Werkzeugteil801. Ein weiterer O-Ring (nicht dargestellt) kann auch an weiteren Abschnitten der Vorrichtung zur Abdichtung vorgesehen sein, insbesondere um ein Entweichen des Kühl- und/oder Schmiermittels in den Spalt 730 zwischen den beiden Werkzeugteilen 701, 801 zu verhindern.

Die Vorrichtung 901 zur Abdichtung kann ferner ein Außengewinde 911 aufweisen, das zur lösbaren Verbindung der Vorrichtung 901 zur Abdichtung mit einem der beiden Werkzeugteile 701, 801 (in Fig. 9 etwa dem ersten Werkzeugteil 801, insbesondere einem darin vorgesehen Innengewinde 818) vorgesehen sein kann. In einer alternativen Ausführungsform kann die Vorrichtung zur Abdichtung mehrere Außengewinde aufweisen, um eine lösbare Verbindung mit einem oder mit beiden Werkzeugteilen 701, 801 herstellen zu können. In einer weiteren alternativen Ausführungsform (nicht gezeigt) kann die Vorrichtung zur Abdichtung mehrere O-Ringe aufweisen. In einer noch weiteren alternativen Ausführungsform kann ein O-Ring derart angeordnet sein, dass Kühl- und/oder Schmiermittel nicht zu einem oder zu den Außengewinden der Vorrichtung zur Abdichtung gelangen kann.

Ferner ist in Fig. 9 eine MMS-Schraube 830 dargestellt, die zur Einstellung der Einspanntiefe des Werkzeugs in die Bohrung 820 dienen kann, wobei die MMS-Schraube 830 z.B. einen Innensechskant 834 aufweisen kann, in den ein passender Schlüssel durch die Kanäle 710, 908 eingesteckt werden kann. Durch eine Rotation des eingeführten Schlüssels kann die MMS-Schraube 830 in eine rotierende Bewegung versetzt werden. Durch die rotierende Bewegung der MMS-Schraube 830 sowie aufgrund des Außengewindes 832 der MMS-Schraube 830, das z.B. in ein Innengewinde 822 des Werkzeugteils 801 eingreift, kann die MMS-Schraube nach links oder nach rechts verfahren werden. Falls die MMS-Schraube 830 nach links versetzt wird, kann das Werkzeug tiefer in die Bohrung 820 eingesteckt werden. Falls die MMS-Schraube 830 nach rechts versetzt wird, kann das Werkzeug weniger tief in die Bohrung 820 eingesetzt werden.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 100: Werkzeugsystem
- 101: zweites Werkzeugteil
- 103: zweite Platte eines Flansches
- 104: Anlagefläche der zweiten Platte des Flansches
- 110: zweiter Kühl- und/oder Schmiermittelkanalabschnitt
- 111: Spalt
- 112: Ausnehmung
- 113: Bohrung
- 201: erstes Werkzeugteil
- 202: Mutter
- 204: erste Platte eines Flansches
- 207: erster Kühl- und/oder Schmiermittelkanalabschnitt
- 208: Vorsprung
- 210: erste Bohrung
- 211: zweite Bohrung
- 212: Anlagefläche der ersten Platte des Flanschs
- 301: Vorrichtung zur Abdichtung
- 302: erster Abschnitt der Vorrichtung zur Abdichtung
- 303: dritter Kühl- und/oder Schmiermittelkanalabschnitt
- 304: zweiter Abschnitt der Vorrichtung zur Abdichtung
- 305: mittlerer Abschnitt der Vorrichtung zur Abdichtung
- 401: Vorrichtung zur Abdichtung
- 402: erster Abschnitt der Vorrichtung zur Abdichtung
- 403: dritter Kühl- und/oder Schmiermittelkanalabschnitt
- 404: zweiter Abschnitt der Vorrichtung zur Abdichtung
- 405: mittlerer Abschnitt der Vorrichtung zur Abdichtung
- 406: Scheibe
- 407: Ausnehmung
- 500: Flansch
- 502: Mutter
- 505: Schraube
- 600: Werkzeugsystem
- 601: zweites Werkzeugteil
- 602: erstes Werkzeugteil
- 603: erster Kühl- und/oder Schmiermittelkanalabschnitt
- 604: Schraube
- 605: erste Platte eines Flansches
- 606: zweite Platte eines Flansches
- 607: Vorrichtung zur Abdichtung
- 608: Abschnitt mit größerem Außendurchmesser
- 609: erster Kühl- und/oder Schmiermittelkanalabschnitt
- 610: dritter Kühl- und/oder Schmiermittelkanalabschnitt
- 611: Spalt
- 701: zweites Werkzeugteil
- 710: zweiter Kühl- und/oder Schmiermittelkanalabschnitt
- 720: HSK-Schnittstelle
- 800: Werkzeugsystem
- 801: erstes Werkzeugteil
- 807: erster Kühl- und/oder Schmiermittelkanalabschnitt
- 818: Innengewinde
- 820: Bohrung
- 822: Innengewinde der Bohrung
- 830: MMS-Schraube
- 832: Außengewinde
- 834: Innensechskant
- 901: Vorrichtung zum Abdichten
- 903: erster Abschnitt
- 904: zweiter Abschnitt
- 905: mittlerer Abschnitt
- 906: Dichtlippe
- 907: Dichtlippe
- 908: dritter Kühl- und/oder Schmiermittelkanalabschnitt
- 910: O-Ring
- 911: Außengewinde

## Patentansprüche

1. Werkzeugsystem (100) mit einem ersten Werkzeugteil (201) und einem ersten Kühl- und/oder Schmiermittelkanalabschnitt (207) eines Kühl- und/oder Schmiermittelkanals durch das Werkzeugsystem (100), wobei der erste Kühl- und/oder Schmiermittelkanalabschnitt (207) durch das erste Werkzeugteil (201) verläuft, und
ein zweites Werkzeugteil (101) und einer Vorrichtung zur Abdichtung (301) des Kühl- und/oder Schmiermittelkanals an einer Schnittstelle zwischen dem ersten Werkzeugteil (201) und dem zweiten Werkzeugteil (101), wobei der Kühl- und/oder Schmiermittelkanal einen zweiten Kühl- und/oder Schmiermittelkanalabschnitt (110), der durch das zweite Werkzeugteil (101) und einen dritten Kühl- und/oder Schmiermittelkanalabschnitt (303), der durch die Vorrichtung (301) verläuft, wobei
das zweite Werkzeugteil (101) einen Hohlschaftkegel bzw. einen Steilkegel umfasst, und dass
die Vorrichtung zur Abdichtung (301) zur Abdichtung des Kühl- und/oder Schmiermittelkanals an einer Schnittstelle zwischen dem ersten Werkzeugteil (201) und dem zweiten Werkzeugteil (101) vorgesehen ist,
**dadurch gekennzeichnet, dass**
das erste Werkzeugteil (201) eine Halterung zum Aufnehmen eines Werkzeugs umfasst und
das Werkzeugsystem (100) ferner umfasst:
einen ersten Abschnitt (302), der mit dem ersten Werkzeugteil (201) verbindbar ist, einen zweiten Abschnitt (304), der derart angeordnet ist, dass er in den zweiten Kühl- und/oder Schmiermittelkanalabschnitt (110) des zweiten Werkzeugteils (101) hineinragen kann, wobei ein Außendurchmesser des zweiten Abschnitts (304) größer als oder gleich wie ein Innendurchmesser des zweiten Kühl- und/oder Schmiermittelkanalabschnitts (110) des zweiten Werkzeugteils (101) ist, und
einen mittleren Abschnitt (305), der zwischen dem ersten Abschnitt (302) und dem zweiten Abschnitt (304) angeordnet ist.

2. Werkzeugsystem (100; 600) nach Anspruch 1, **dadurch gekennzeichnet, dass**
das erste Werkzeugteil (201; 602) eine erste Platte (204; 605) eines Flansches umfasst, und
das zweite Werkzeugteil (101; 601) eine zweite Platte (103; 606) des Flansches umfasst,
wobei das erste Werkzeugteil (201; 602) mit dem zweiten Werkzeugteil (101; 103) mittels des Flansches verbindbar ist, wobei die eine der ersten bzw. zweiten Platte (103; 606) Bohrungen (113) mit Innengewinde aufweist, in die Schrauben (205; 604) einschraubbar sind, wobei Spitzen der Schrauben auf der komplementären zweiten bzw. ersten Platte (204; 605) aufsitzen.

3. Werkzeugsystem (100; 600) nach Anspruch 2, **dadurch gekennzeichnet, dass** die eine der ersten bzw. zweiten Platte (103; 606) mindestens sechs Bohrungen (211) mit Innengewinde aufweist.

## Claims

1. A tool system (100) with a first tool element (201) and an initial lubricant and/or coolant channel section (207) of the coolant and lubricant channel spanning the tool system (100) with the first coolant and/or lubricant channel section (207) traversing the first tool element (201), and
a second tool element (101) and a sealing device (301) for the coolant and/or lubricant channel at an intersection between the first tool element (201) and the second tool element (101) with the coolant and/or lubricant channel traversing a second coolant and/or lubricant section (110), which runs through the second tool element (101), and a third coolant and/or lubricant channel section (303) traversing the device (301), wherein
the second tool element (101) comprising a hollow taper shank or a steep-angle taper respectively, and
a sealing device (301) to seal the coolant and/or lubricant channel is arranged at an intersection between the first tool element (201) and the second tool element (101),
**characterised in that**
the first tool element (201) comprising a mounting bracket for a tool, and the tool system (100) further comprises
an initial section (302), which can be connected to the first tool element (201),
a second section (304) designed in such a way that it can protrude into the second coolant and/or lubricant channel section (110) of the second tool element (101) whereby one outer diameter of the second section (304) is equally large or larger than the inner diameter of the second coolant and/or lubricant channel section (110) of the second tool element (101), and
a centre section (305) located between the first section (302) and the second section (304).

2. Tool system (100; 600) according to claim 1,
**characterised in that**
the first tool element (201; 602) comprises a first flange plate (204; 605), and
the second tool element (101; 601) comprises a second flange plate (103; 606)
whereby the first tool element (201; 602) can be connected to the second tool element (101; 103) using the flange; whereby the first or second plate, respectively (103; 606) comprises drilled holes (113) with female thread, into which screws (205; 604) can be inserted whereby the tips opposite the screw heads touch the complementary second or first plate (204; 605), respectively.

3. Tool system (100; 600) according to claim 2,
**characterised in that**
at least one of the plates (103; 606) comprises at least six drill holes (211) with female thread.

## Revendications

1. Un système d'outillage (100) avec une première partie de l'outil (201) et une première section d'un canal de refroidissement (207) d'un canal de refroidissement et/ou de lubrifiant (100), dans lequel la première section du canal de refroidissement et/ou de lubrifiant (207) traverse la première partie de l'outil (201), et
une deuxième partie de l'outil (101) et un dispositif de fermeture (301) d'un canal de refroidissement et/ou de lubrifiant à une jonction entre la première partie de l'outil (201) et la deuxième partie de l'outil (101) où le canal de refroidissement et/ou de lubrifiant une seconde section d'un canal de refroidissement et/ou de lubrifiant (110), qui passe par la deuxième partie de l'outil (101) et une troisième section d'un canal de refroidissement et/ou de lubrifiant (303) traverse la jointure (301) où
la deuxième partie de l'outil (101) comprend un cône face creux et un cône de préhension et que
le dispositif de fermeture (301) assure l'étanchéité du canal de refroidissement et/ou de lubrifiant à une jonction entre la première partie de l'outil (201) et la seconde partie de l'outil (101),
tous ces éléments **fournissent,** la première partie de l'outil (201) comprend un logement pour la réception d'un outil et
au système d'outillage (100) les caractéristiques suivantes :
une première section (302), qui peut être relié à la première partie de l'outil (201);
une seconde section (304) laquelle est conçue de sorte à pouvoir rentrer dans le second canal de refroidissement et/ou de lubrifiant (110), de la deuxième partie de l'outil (101), où un diamètre extérieur de la deuxième section (304) est plus grand ou identique au diamètre intérieur de la deuxième section du canal de refroidissement et/ou de lubrifiant (110) de la deuxième partie de l'outil (101), et
une section au milieu (305) se situant entre la première (302) et la seconde section (304).

2. Le système d'outillage (100; 600), selon la revendication 1, se **caractérise en ce, que** la première partie de l'outil (201; 602) comprend un premier plateau (204; 605) d'une bride et
la deuxième partie de l'outil (101; 601) comprend un deuxième plateau (103; 606) de la bride
où la première partie de l'outil (201; 602) est reliée à la seconde partie de l'outil (101; 103) au moyen de la bride où les trous (113) du premier et du deuxième plateau (103; 606) dotés d'un filet femelle, dont les vis (205; 604) peuvent être resserrées et les pointes des vis montées sur le premier (204; 605) et le second plateau complémentaire.

3. Le système d'outillage (100; 600) selon la revendication 2, est **caractérisé par** le premier et le deuxième plateau (103; 606) avec au moins six trous (211) dotés d'un filet femelle.
